# EUROPÄISCHE PATENTANMELDUNG

(11) **EP 2 060 882 A2**
(43) Veröffentlichungstag der Anmeldung: **20.05.2009**
(21) Anmeldenummer: 08405224.0
(22) Anmeldetag: 12.09.2008
(51) Int. Cl.: G01F 11/16

(54) **Vorrichtung zum Dosieren einer pulverigen oder pastösen Substanz**

(30) Priorität: 15.11.2007 DE 102007054886
(71) Anmelder: Cueni, Hansjörg, 6362 Stansstad (CH)
(72) Erfinder: Cueni, Hansjörg, 6362 Stansstad (CH)
(74) Vertreter: Nückel, Thomas

(57) **Zusammenfassung**

Die erfindungsgemäße Vorrichtung zum Dosieren einer pulverförmigen oder pastösen Substanz umfasst einen Vorratsbehälter (2) für die Substanz (3) und ein Förderelement (6) mit einer Ausnehmung (7.1) sowie eine Führung (5), in der das Förderelement (6) translatorisch beweglich gelagert ist. Das Förderelement (6) mit der Ausnehmung (7.1) ist in eine erste und eine zweite Stellung bringbar, wobei die Ausnehmung (7.1) in der ersten Stellung vorgesehen ist, um die Substanz (3) aufzunehmen und wobei die Ausnehmung (7.1) in der zweiten Stellung vorgesehen ist, um die Substanz (3) abzugeben. Zudem ist eine magnetische Fläche (16) am Vorratsbehälter (2) vorgesehen.

## Beschreibung

### Technisches Gebiet

Die Erfindung betrifft eine Vorrichtung zum präzisen Dosieren einer pulverigen oder pastösen Substanz sowie einen Dosierautomat für die Dosiervorrichtung.

### Stand der Technik

Aus dem Stand der Technik WO 2007/039613 A1 ist eine Dosiereinrichtung für pulver- oder pastenförmige Substanzen bekannt. Die Dosiereinrichtung umfasst ein Austragungs- und Verschlusselement, das mit der Austrittsöffnung auf der Mittellängsachse des Dosierkopfs angeordnet ist und relativ zum Gehäuse um die Mittellängsachse rotierbar und entlang der Mittellängsachse bezüglich der Austrittsöffnung translatorisch verschiebbar ausgestaltet ist. Das Austragungs- und Verschlusselement ist in seiner Grundform zylinderförmig ausgebildet und weist mindestens zwei dem Verschließen der Austrittsöffnung dienende, entlang der Mittellängsachse voneinander beabstandet angeordnete zylinderförmige Verschlussbereiche auf. Zudem weist das Austragungs- und Verschlusselement einen Austragungsbereich auf, der zwischen den Verschlussbereichen angeordnet ist und der Austragung von zu dosierender Substanz dient, wobei der Austragungsbereich mit mindestens einer vom Zylindermantel ausgehenden Vertiefung versehen ist. Diese Dosiereinrichtung hat den Nachteil, dass sie für den automatisierten Einsatz nur bedingt verwendbar ist, da sie nicht ohne weiteres von einem Manipulator gegriffen werden kann.

### Darstellung der Erfindung

Eine Aufgabe der Erfindung ist es, eine Vorrichtung zum Dosieren einer pulverförmigen oder pastösen Substanz anzugeben, die für den automatisierten Einsatz geeignet ist.

Die Aufgabe wird durch eine Vorrichtung zum Dosieren einer pulverförmigen oder pastösen Substanz mit den Merkmalen gemäß Patentanspruch 1 gelöst.

Die erfindungsgemäße Vorrichtung zum Dosieren einer pulverförmigen oder pastösen Substanz umfasst einen Vorratsbehälter für die Substanz und ein Förderelement mit einer Ausnehmung sowie eine Führung, in der das Förderelement translatorisch beweglich gelagert ist. Das Förderelement mit der Ausnehmung ist in eine erste und eine zweite Stellung bringbar, wobei die Ausnehmung in der ersten Stellung vorgesehen ist, um die Substanz aufzunehmen und wobei die Ausnehmung in der zweiten Stellung vorgesehen ist, um die Substanz abzugeben. Zudem ist eine magnetische Fläche am Vorratsbehälter vorgesehen.

Vorteilhafte Weiterbildungen der Erfindung ergeben sich aus den in den abhängigen Patentansprüchen angegebenen Merkmalen.

Bei einer Ausführungsform der erfindungsgemäßen Dosiervorrichtung ist ein Betätigungsmittel vorgesehen, mittels welchem das Förderelement in der Führung bewegbar ist. Zudem ist eine Feder vorgesehen, um auf das Förderelement eine Rückstellkraft auszuüben, wenn sich das Förderelement in der zweiten Stellung befindet. Die zweite Stellung wird im Folgenden auch als geöffnete Stellung bezeichnet.

Bei einer weiteren Ausführungsform der erfindungsgemäßen Dosiervorrichtung weist der Vorratsbehälter einen Verschluss auf, wobei die Führung in den Verschluss integriert ist. Damit wird die Anzahl der erforderlichen Bauteile reduziert.

Bei einer zusätzlichen Ausführungsform der erfindungsgemäßen Dosiervorrichtung ist im Verschluss ein Durchlass vorgesehen, durch welchen das Betätigungsmittel ragt. Dadurch lässt sich eine besonders kompakte Bauweise erreichen. Zudem hat bei dieser Ausführungsform die Ausgestaltung der eigentlichen Dosiereinheit keinen Einfluss auf die Form des Vorratsbehälters. Das heißt, die Form des Vorratsbehälters kann unabhängig von der Ausgestaltung der eigentlichen Dosiereinheit gewählt werden.

Zudem ist es von Vorteil, wenn am Durchlass für das Betätigungsmittel eine Dichtung vorgesehen ist. Dadurch wird sichergestellt, dass die im Vorratsbehälter befindliche Substanz nicht durch den Durchlass aus dem Vorratsbehälter austritt.

Bei einer Weiterbildung der erfindungsgemäßen Dosiervorrichtung weist das Betätigungsmittel einen Magneten auf. Das hat den Vorteil, dass das Förderelement berührungslos betätigt und auf den Durchlass im Verschluss sowie die Dichtung im Verschluss verzichtet werden kann.

Bei einer zusätzlichen Weiterbildung der erfindungsgemäßen Dosiervorrichtung kann der Magnet als Permanentmagnet oder als Elektromagnet ausgebildet sein. Welche Variante besser geeignet ist, hängt vom Anwendungsfall und der Ausführung des Dosierautomaten ab.

Bei einer bevorzugten Ausführungsform der erfindungsgemäßen Dosiervorrichtung ist der Magnet ausserhalb des Vorratsbehälters angeordnet.

Zudem ist es von Vorteil, wenn bei der erfindungsgemässen Dosiervorrichtung das Förderelement magnetisierbar ist.

Darüber hinaus kann bei der erfindungsgemäßen Dosiervorrichtung das Förderelement einen Konus aufweisen. Befindet sich das Förderelement in der ersten Stellung, welche auch als geschlossene Stellung bezeichnet wird, bildet der Konus mit der Führung einen Formschluss und verhindert so das unerwünschte Austreten der im Vorratsbehälter befindlichen Substanz.

Zur Lösung der Aufgabe wird ferner vorgeschlagen, dass bei der erfindungsgemäßen Dosiervorrichtung die Ausnehmung so im Förderelement positioniert ist, dass sie im Vorratsbehälter angeordnet ist, wenn sich das Förderelement in der ersten Stellung befindet.

Bei einer Weiterbildung der erfindungsgemäßen Dosiervorrichtung weist das Förderelement wenigstens eine weitere Ausnehmung auf. Dadurch wird erreicht, dass mehr Substanz aufgenommen und zum Auslass transportiert werden kann. Dadurch, dass mehrere Ausnehmungen vorgesehen sind, wird erreicht, dass bei einem einmaligen Hub des Förderelements mehr Substanz schrittweise ausgetragen werden kann, wobei die Substanz in mehreren kleinen Portionen ausgetragen wird. Auf diese Weise wird der Dosiervorgang beschleunigt.

Bei einer anderen Weiterbildung der erfindungsgemäßen Dosiervorrichtung ist das Förderelement in eine dritte Stellung bringbar, wobei die Ausnehmung und die weitere Ausnehmung in der dritten Stellung vorgesehen sind, um die Substanz abzugeben.

Des weiteren kann vorgesehen sein, dass die Ausnehmung im Förderelement rund ausgebildet ist. Vorteilhafterweise bleibt dadurch das abzugebende Material nicht in den Ecken des Förderelements liegen.

Zudem wird ein Dosierautomat für die oben beschriebene Dosiervorrichtung vorgeschlagen, der eine Halterung mit einem Elektromagneten zum Halten der Dosiervorrichtung aufweist. Der Dosierautomat ist mit einer Steuerung versehen, um den Elektromagneten, die Betätigungseinrichtung und die Position der Halterung zu steuern.

Die erfindungsgemäße Dosiervorrichtung kann zum feinen Dosieren einer pulverförmigen oder pastösen Substanz verwendet werden.

Das Verfahren vom Dosieren einer Substanz mit Hilfe der oben beschriebenen Dosiervorrichtung umfasst folgende Schritte. Die Halterung des Dosierautomaten wird über die Dosiervorrichtung gebracht, der Elektromagnet wird aktiviert, die Dosiervorrichtung wird an den Ort gebracht, an dem die Dosierung erfolgen soll und die Betätigungseinrichtung wird betätigt.

Zudem kann bei dem Dosierverfahren vorgesehen sein, dass der Magnet des Betätigungsmittels um das Förderelement herum bewegt wird, oder dass der Vorratsbehälter gedreht wird. Auf diese Weise wird die Feder zusammen mit dem Förderelement gedreht, so dass sie zusätzlich als Rührwerk dient und das Pulver wird in Bewegung gebracht, so dass es leichter in die Ausnehmungen des Förderelements rutscht.

Schließlich wird ein Magazin für eine Dosiervorrichtung, wie sie oben beschrieben ist, vorgeschlagen, das eine Aufnahme aufweist, die von oben und seitlich zugänglich ist.

### Kurze Beschreibung der Zeichnungen

Im Folgenden wird die Erfindung mit mehreren Ausführungsbeispielen anhand von 7 Figuren weiter erläutert.
- Figur 1: zeigt eine erste Ausführungsform der erfindungsgemäßen Dosiervorrichtung zusammen mit der Halterung des Dosierautomaten und dem Magazin im Querschnitt, wobei sich das Förderelement in einer ersten Stellung befindet.
- Figur 2: zeigt die erfindungsgemäße Dosiervorrichtung zusammen mit dem Dosierautomaten im Querschnitt, wobei sich das Förderelement in einer zweiten Stellung befindet.
- Figur 3: zeigt eine zweite mögliche Ausführungsform des Förderelements.
- Figur 4: zeigt eine Ausführungsform des Magazins für mehrere Dosiervorrichtungen in der Draufsicht.
- Figur 5: zeigt eine zweite mögliche Ausführungsform der erfindungsgemäßen Dosiervorrichtung zusammen mit der Halterung des Dosierautomaten und dem Magazin im Querschnitt, wobei sich das Förderelement in der ersten Stellung befindet.
- Figur 6: zeigt die zweite Ausführungsform der erfindungsgemäßen Dosiervorrichtung zusammen mit dem Dosierautomaten im Querschnitt, wobei sich das Förderelement in der zweiten Stellung befindet.
- Figur 7: zeigt das Magazin für mehrere der in den Figuren 5 und 6 dargestellten Dosiervorrichtungen in der Draufsicht.

### Wege zur Ausführung der Erfindung

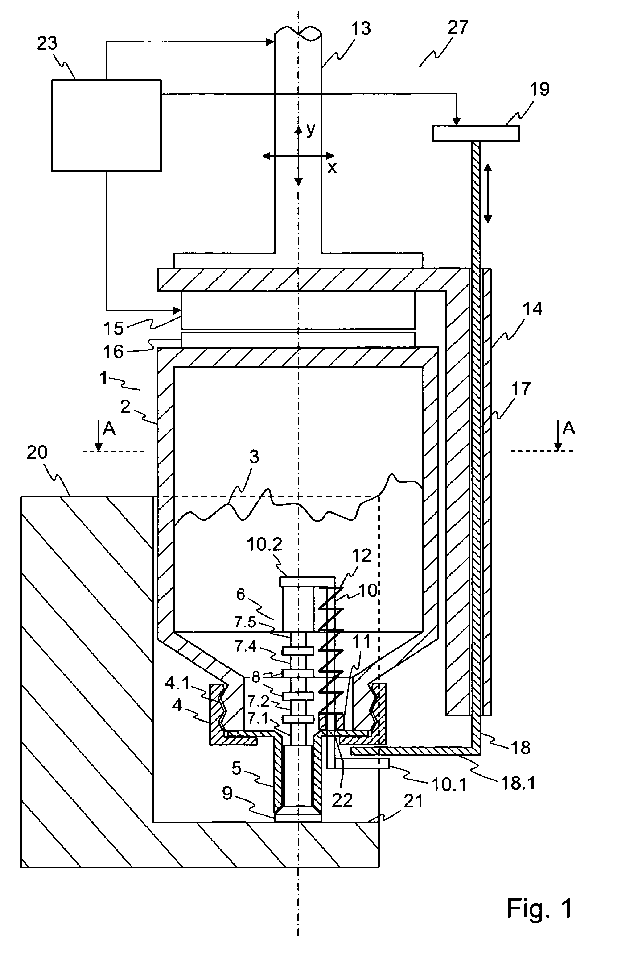

In Figur 1 ist eine erste Ausführungsform der erfindungsgemäßen Dosiervorrichtung 1 zusammen mit einem Magazin 20 für die Dosiervorrichtung 1 und einem Dosierautomaten 27 dargestellt. Unter dem Begriff dosieren wird im Folgenden verstanden, dass eine Substanz in der für erforderlich gehaltenen Menge abgemessen, zugemessen und/oder zugeführt wird.

Die Dosiervorrichtung 1 umfasst einen Vorratsbehälter 2, in dem sich eine pulverige oder pastöse Substanz 3 befindet. Im Folgenden wird, des besseren Verständnisses wegen, lediglich von Pulver gesprochen, gemeint ist damit aber eine pulverige oder pastöse Substanz. Der Vorratsbehälter 2 verjüngt sich nach unten hin und weist eine Öffnung auf, die mit einem Schraubverschluss 4 verschlossen ist. Der Schraubverschluss 4 weist dazu ein Gewinde 4.1 auf. Im Inneren des Vorratsbehälters 2 ist ein Förderelement 6 angeordnet, das in einer Führung 5 beweglich gelagert ist. In Figur 1 ist das Förderelement 6 in einer ersten Stellung (geschlossene Stellung) gezeigt. Ein am unteren Ende des Förderelements 6 befindlicher Konus 9 bildet mit dem Auslass 5.1 der Führung 5 einen Formschluss und verhindert so, dass das Pulver aus dem Vorratsbehälter 2 entweichen kann. Bei der in Figur 1 gezeigten Ausführungsform des Förderelements 6 sind fünf Ausnehmungen 7.1 bis 7.5 vorgesehen, die sich, wenn sie sich in der ersten Stellung befinden, im Vorratsbehälter 6 befinden, um das Pulver 3 aufnehmen. Die Ausnehmungen 7.1 bis 7.5 sind durch Stege oder Rippen 8 voneinander getrennt. Die Führung 5 kann Bestandteil des Verschlusses 4 sein. Sie kann aber auch, wie in Figur 1 gezeigt, ein separates Bauteil sein, das durch den Verschluss 4 auf der Auslassöffnung des Vorratsbehälters 2 fixiert wird. Um das Förderelement 6 zu bewegen, ist seitlich neben dem Förderelement 6 ein Hebelarm 10 angeordnet, welcher auch als Betätigungselement bezeichnet wird. Das Betätigungselement 10 ragt durch einen Durchlass 22 aus dem Vorratsbehälter 2 heraus. Am oberen Ende ist das Betätigungselement 10 abgewinkelt und weist eine Auflagefläche 10.2 auf, die mit dem oberen Ende des Förderelements 6 verbunden ist. Das aus dem Vorratsbehälter 2 herausragende Ende des Betätigungselements 10 ist ebenfalls abgewinkelt und weist eine Auflagefläche 10.1 auf. Mit Hilfe einer Feder 12, welche entlang der Längsachse des Betätigungselements 10 angeordnet ist, wird erreicht, dass das Förderelement 6 in der ersten Stellung gehalten wird, wenn auf die Auflagefläche 10.1 keine äußeren Kräfte wirken.

Mit Hilfe des Dosierautomaten 27, der auch als Manipulator bezeichnet wird, kann die Dosiervorrichtung 1 aus dem Magazin 20 genommen werden, an einen Ort gebracht werden, an dem die Dosierung erfolgen soll und schließlich auch das Förderelement 6 betätigt werden. Um die Dosiervorrichtung 1 halten zu können, weist der Dosierautomat 27 einen Arm 13 auf, der auf seiner Unterseite einen Elektromagneten 15 trägt. Der Elektromagnet 15 wird über eine Steuerung 23 gesteuert. Auf der Oberseite des Vorratsbehälters 2 ist eine magnetische Scheibe 16 oder ein anderes, geeignet geformtes magnetisches Bauteil angeordnet, damit der Arm 13 mit dem Elektromagneten 15 die Dosiervorrichtung 1 halten kann und aus dem Magazin 20 entnehmen kann. Der Dosierautomat 27 weist zusätzlich eine Halterung 14 mit einer Führung 17 auf, in der ein Betätigungshebel 18 beweglich angeordnet ist. Am unteren Ende des Betätigungshebels 18 befindet sich eine Auflagefläche 18.1, die mit der Auflagefläche 10.1 des Hebelarms 10 in Verbindung bringbar ist.

Statt des Elektromagneten 15 kann am Arm 13 des Dosierautomaten 27 auch ein Permanentmagnet vorgesehen sein.

Um die Dosiervorrichtung 1 zu greifen und zu halten, wird der Arm 13 mit dem Magneten 15 zuerst seitlich neben der magnetischen Fläche 16 der Dosiervorrichtung positioniert. Dann wird der Magnet 15 parallel zur x-Achse über die magnetische Fläche 16 gebracht. Ist der Magnet 15 als Elektromagnet ausgebildet, wird der Elektromagnet, sobald er über der magnetischen Fläche 16 positioniert ist, mittels der Steuerung 23 aktiviert.

Der Magnet 15 und die magnetische Fläche 16 können so ausgebildet sein, dass sich die Dosiervorrichtung 1 gegenüber dem Magneten 15 selbst zentriert. Dadurch können Ungenauigkeiten bei der Positionierung ausgeglichen werden.

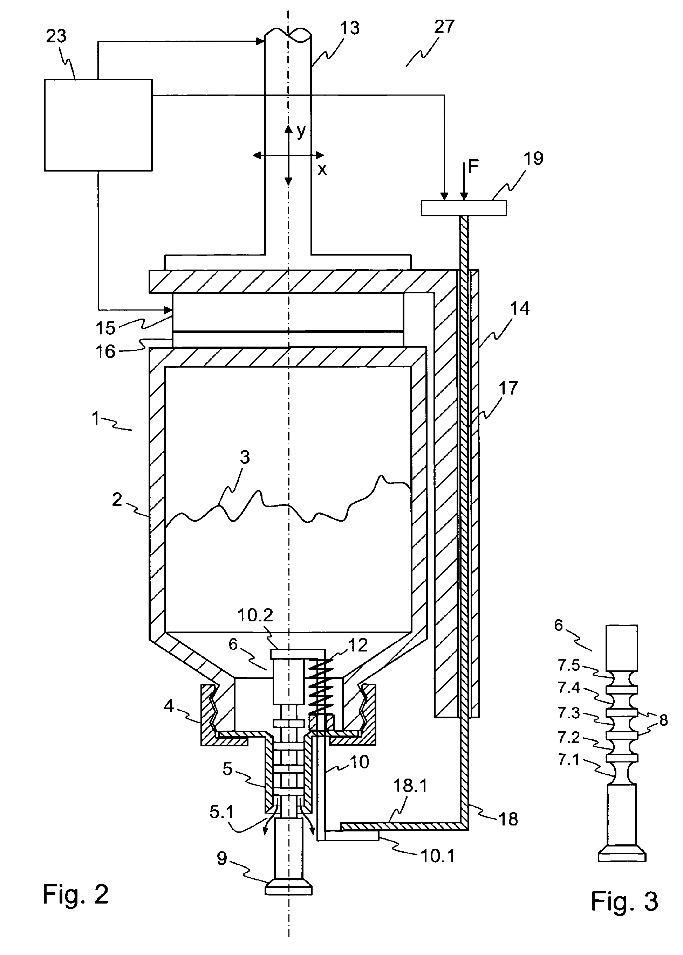

In Figur 2 ist der Dosierautomat 27 zusammen mit der Dosiervorrichtung 1 im Schnitt dargestellt, wobei sich das Förderelement 6 in einer geöffneten Stellung befindet. Die Steuerung 23 hat veranlasst, dass auf den Teller 19, welcher sich am oberen Ende des Betätigungshebels 18 befindet, eine Kraft F ausgeübt wird, so dass das Förderelement 6 in der Führung 5 nach unten bewegt wird. Die Feder 12 wird dabei gespannt, so dass eine Rückstellkraft auf das Förderelement 6 wirkt, um das Förderelement 6 wieder in die geschlossene Stellung zu bringen, wenn der Betätigungshebel 18 in seine Ruheposition (Figur 1) zurückkehrt.

Mit Hilfe der Steuerung 23 kann auch veranlasst werden, dass der Betätigungshebel 18 noch weiter nach unten gedrückt wird, so dass das Förderelement 6 ebenfalls weiter nach unten bewegt wird und dadurch noch weitere Ausnehmungen 7.2 bis 7.5 das Pulver portionsweise freigeben. Diese Stellung wird im Folgenden auch als dritte Stellung bezeichnet. Jede dieser Ausnehmungen 7.1 bis 7.5 dient als separate Pulverförderkammer. In der geschlossenen Stellung (erste Stellung) ist jede dieser Ausnehmungen 7.1 bis 7.5 mit Pulver gefüllt. Je weiter das Förderelement 6 nach unten bewegt wird, desto mehr Ausnehmungen 7.1 bis 7.5 werden dadurch aus der Führung 5 herausbewegt und geben somit portionsweise das in ihnen befindliche Pulver durch den Auslass 5.1 nach außen ab. Die beiden Pfeile am Auslass 5.1 deuten dies an.

In Figur 3 ist eine zweite mögliche Ausführungsform des Förderelements 6 in der Seitenansicht dargestellt. Gegenüber der in den Figuren 1 und 2 gezeigten Ausführungsform des Förderelements 6 weist das Förderelement 6 gemäß Figur 3 runde Ausnehmungen 7.1 bis 7.5 auf.

Die in Figur 3 gezeigte Ausführungsform des Förderelements 6 ist besonders dann von Vorteil, wenn äußerst feines Pulver dosiert werden soll. Dies gilt insbesondere für Pulver, dessen Granulierung deutlich kleiner als die Größe der Ausnehmungen 7.1 - 7.5 ist. Durch die runden Ausnehmungen 7.1 bis 7.5 wird verhindert, dass sich Pulver auf den Stegen 8 ablagert und sich das Fördervolumen verkleinert. Ist das zu dosierende Pulver gröber, kann das in den Figuren 1 und 2 gezeigte Förderelement verwendet werden.

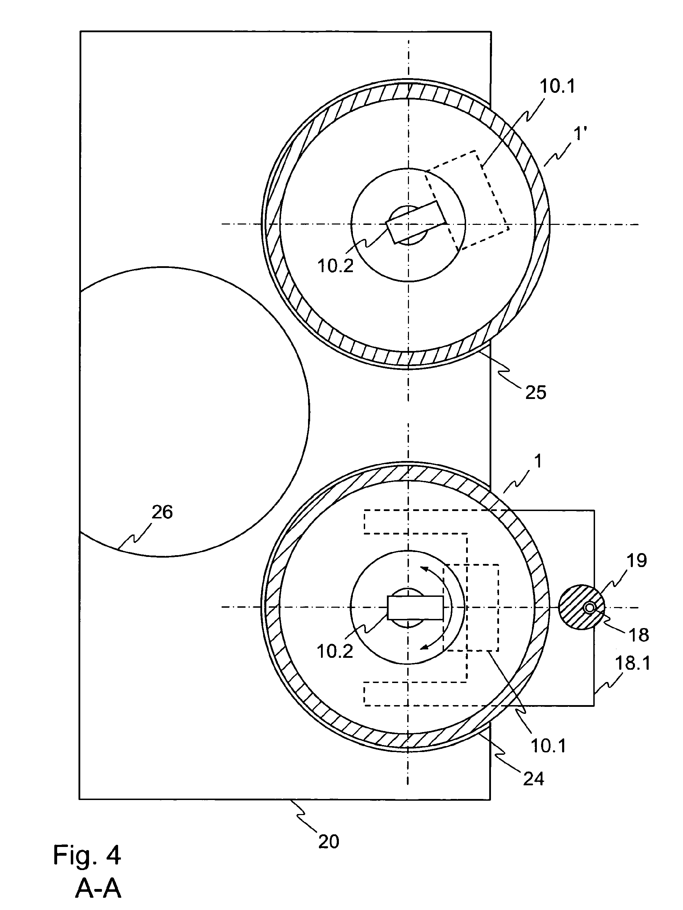

In Figur 4 ist das Magazin 20 in der Draufsicht zusammen mit zwei Dosiervorrichtungen 1, 1' und dem Betätigungshebel 18 des Dosierautomaten 27 gezeigt. Das Magazin 20 ist zur Aufnahme von drei Dosiervorrichtungen ausgebildet, kann jedoch selbstverständlich für eine beliebige Anzahl von Dosiervorrichtungen aufgebildet sein. Das Magazin 20 weist dazu drei Aufnahmen 24, 25 und 26 auf. Die Aufnahmen 24, 25 und 26 haben die gleiche Kontur wie die Dosiervorrichtung 1, um die Dosiervorrichtung formschlüssig zu halten. Damit der Dosierautomat 27 mit seinem Betätigungshebel 18 und der Auflagefläche 18.1 unter die Dosiervorrichtung 1 greifen kann, sind die Aufnahmen 24, 25 und 26 seitlich zugänglich.

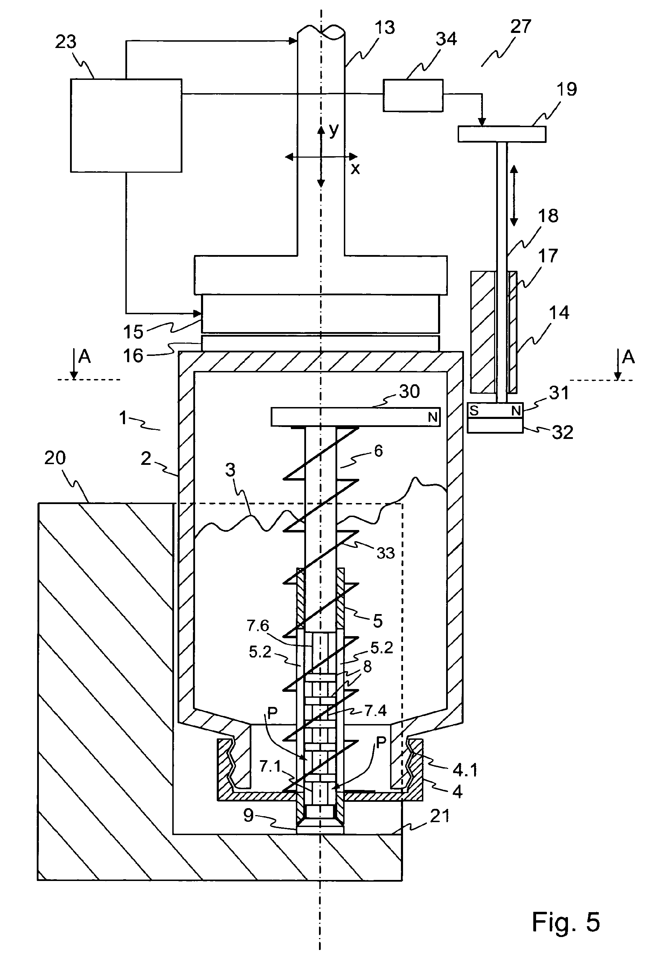

Figur 5 zeigt eine zweite mögliche Ausführungsform der erfindungsgemäßen Dosiervorrichtung 1 zusammen mit dem Arm 13 des Dosierautomaten 27 und dem Magazin 20 im Querschnitt, wobei sich das Förderelement 6 in der ersten (geschlossenen) Stellung befindet. Im Unterschied zur ersten Ausführungsform wird bei der zweiten Ausführungsform der Dosiervorrichtung das Förderelement 6 mit einem ausserhalb des Vorratsbehälters 2 angeordneten Magneten 31 bewegt. Das Förderelement 6 trägt dazu am oberen Ende einen magnetisierbaren Hebelarm 30, welcher beispielsweise aus Stahl gefertigt ist. Um den Hebelarm 30 und damit das Förderelement 6 zu bewegen, wird der Magnet 31 auf der Aussenseite des Vorratsbehälters 2 in die Nähe des Hebelarms 30 gebracht, so dass mit dem Magneten 31 auf den Hebelarm 30 eine magnetische Kraft ausgeübt werden kann. Vorzugsweise ist das Förderelement 6 in der Führung 5 drehbar gelagert. Dadurch kann sich der Hebelarm 30 selbst auf den Magneten 31 ausrichten. Anschliessend wird der Magnet 31 mit dem Betätigungshebel 18 aussen am Vorratsbehälter 2 nach unten beziehungsweise oben bewegt.

Durch die magnetische Kopplung wird das Förderelement 6 ebenfalls nach unten beziehungsweise oben bewegt.

Um eine sichere Führung des Förderelements 6 zu gewährleisten, ist die rohrförmige Führung 5 länger ausgebildet als in der ersten Ausführungsform. Damit das im Vorratsbehälter 2 befindliche Pulver in die Ausnehmungen 7.1 bis 7.6 des Förderelements 6 rutschen kann, sind in der rohrförmigen Führung 5 mehrere Durchtrittsöffnungen 5.2 vorgesehen. Die Pfeile P kennzeichnen symbolisch das in die Ausnehmungen 7.1 bis 7.6 nachrutschende Pulver.

Darüber hinaus ist im Vorratsbehälter 2 eine Spiralfeder 33 vorgesehen, in deren Mitte das Förderelement 6 angeordnet ist, und die sich zwischen dem Verschluss 4 und dem Hebelarm 30 abstützt. Die Spiralfeder 33 ist als Druckfeder ausgebildet und sorgt dafür, dass das Förderelement 6 in der ersten (geschlossenen) Stellung gehalten wird, wenn sich der Magnet 31 nicht in der Nähe des Hebelarms 30 befindet. Zudem unterstützt die Spiralfeder 33 den Schliessvorgang.

Des Weiteren kann vorgesehen sein, dass der Magnet 31 an den Hebelarm 30 angekoppelt und um das Förderelement 6 herum bewegt wird. Auf diese Weise wird die Spiralfeder 33 mit dem Förderelement 6 gedreht und zusätzlich als Rührwerk benutzt und das Pulver in Bewegung gebracht, so dass es leichter in die Ausnehmungen 7.1 bis 7.6 des Förderelements 6 rutscht. Statt den Magneten 31 um das Förderelement 6 herum zu bewegen, kann auch der Vorratsbehälter 2 gedreht werden und der Magnet 31 bleibt an Ort und Stelle. Um die Funktion der Spiralfeder 33 als Rührwerk noch weiter zu verbessern, kann an der Spiralfeder 33 beispielsweise ein Stift oder Haken angebracht sein.

Um die auf den Hebelarm 30 ausgeübte Magnetkraft zu erhöhen, kann ein weiterer Magnet 32 vorgesehen sein. Alternativ dazu kann aber auch der Magnet 31 stärker ausgebildet sein.

Es ist auch möglich, den Hebelarm 30 permanentmagnetisch auszubilden.

Ob der Magnet 31 als Elektromagnet oder als Permanentmagnet ausgebildet ist, hängt vom Anwendungsfall und von der Bauform des Dosierautomaten 27 ab.

Das Förderelement 6 kann bei der zweiten Ausführungsform auch runde Ausnehmungen 7 aufweisen, wie dies in Figur 3 gezeigt ist.

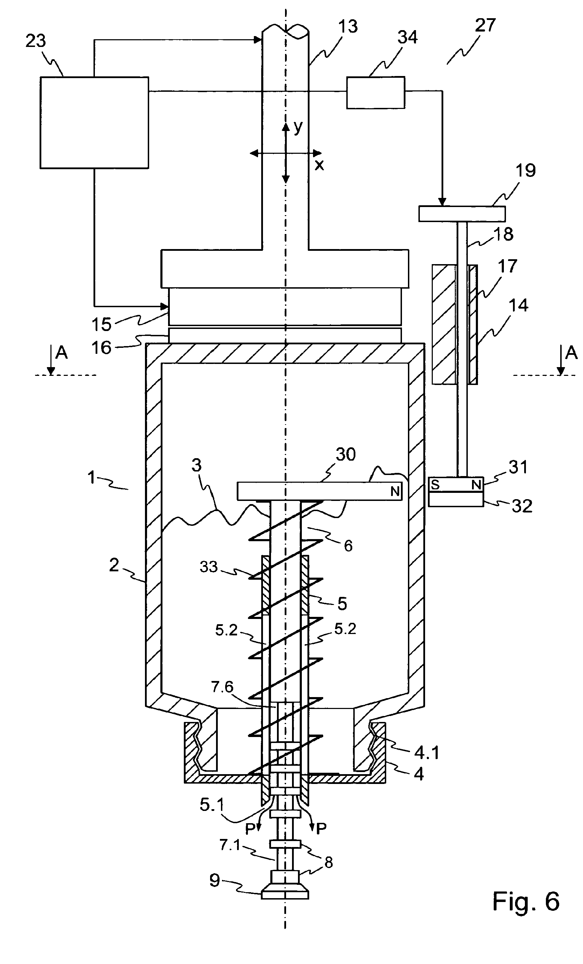

Figur 6 zeigt die zweite Ausführungsform der erfindungsgemäßen Dosiervorrichtung 1 zusammen mit einem Teil des Dosierautomaten 27 im Querschnitt, wobei sich das Förderelement 6 in der zweiten (offenen) Stellung befindet. Die Steuerung 23 hat veranlasst, dass mit einem Antrieb 34 auf den Teller 19 und den Betätigungshebel 18 eine Kraft F ausgeübt wird, so dass das Förderelement 6 in der Führung 5 nach unten bewegt wird. Die Feder 33 wird dabei gespannt.

Der Antrieb 34 kann ein Elektromotor oder ein elektrisch betriebener Linearmotor sein.

Je weiter das Förderelement 6 nach unten bewegt wird, desto mehr Ausnehmungen 7.1 bis 7.6 werden dadurch aus der Führung 5 herausbewegt und geben somit portionsweise das in ihnen befindliche Pulver durch den Auslass 5.1 nach außen ab. Die beiden Pfeile P am Auslass 5.1 deuten dies an.

Soll das Förderelement 6 wieder in die geschlossene Stellung (siehe Figur 1) gebracht werden, veranlasst die Steuerung 23, dass der Magnet 31 mittels des Antriebs 34 wieder nach oben bewegt wird. Zusätzlich zu der durch den Magneten 31 erzeugten magnetischen Kraft wird durch die Spiralfeder 6 eine Rückstellkraft auf das Förderelement 6 ausgeübt, die den Schliessvorgang unterstützt.

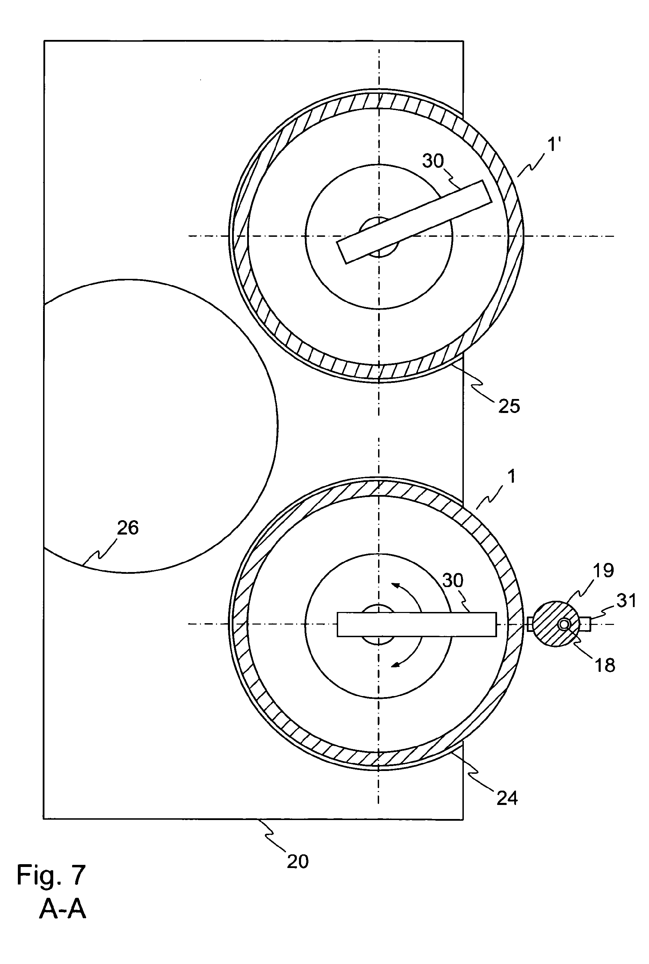

Figur 7 zeigt das Magazin 20 für mehrere der in den Figuren 5 und 6 dargestellten Dosiervorrichtungen 1 in der Draufsicht.

Um die Dosiervorrichtung 1 zu greifen und zu halten, wird der Arm 13 mit dem Magneten 15 zunächst senkrecht über der magnetische Fläche 16 der Dosiervorrichtung positioniert und dann abgesenkt. Ist der Magnet 15 als Elektromagnet ausgebildet, wird der Elektromagnet, wenn er über der magnetischen Fläche 16 positioniert ist, mittels der Steuerung 23 aktiviert.

Je niedriger der oberhalb des Konus 9 angeordnete Steg 8 ist, desto kleiner ist der Hub, der erforderlich ist, um die erste Ausnehmung 7.1 freizugeben.

Vorteilhafterweise wird der Durchmesser des Konus 9 des Förderelements 6 klein gewählt, weil dadurch das Pulver auch in Flaschen oder Gefässe mit einer kleinen Einlassöffnung abgegeben werden kann.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen an der Dosiervorrichtung 1 und dem Magazin 20 möglich, ohne den Umfang der Erfindung sowie ihre Äquivalente zu verlassen. Insbesondere sind die Merkmale der einzelnen Ausführungsformen der Dosiervorrichtung 1 und des Magazins 20 untereinander austauschbar und miteinander kombinierbar.

### Bezugszeichenliste

- 1: Dosiervorrichtung
- 2: Vorratsbehälter
- 3: Pulver
- 4: Verschluss
- 4.1: Gewinde
- 5: Führung
- 5.1: Auslass
- 5.2: Öffnung
- 6: Förderelement
- 7.1: erste Ausnehmung
- 7.2 - 7.6: weitere Ausnehmungen
- 8: Steg
- 9: Konus
- 10: Hebelarm
- 10.1: Auflagefläche
- 10.2: Auflagefläche
- 11: Dichtung
- 12: Feder
- 13: Arm
- 14: Halterung
- 15: Elektromagnet
- 16: magnetische Scheibe
- 17: Führung
- 18: Betätigungshebel
- 18.1: Auflagefläche
- 19: Teller
- 20: Magazin
- 21: Abstellfläche
- 22: Durchlass
- 23: Steuerung
- 24: Aufnahme
- 25: weitere Aufnahme
- 26: weitere Aufnahme
- 27: Dosierautomat
- 30: magnetisierbarer Hebelarm
- 31: zusätzlicher Magnet
- 32: Magnet
- 33: Feder
- x: x-Achse
- y: y-Achse
- F: Kraft
- P: Strömungsrichtung des Pulvers

## Patentansprüche

1. Vorrichtung zum Dosieren einer pulverigen oder pastösen Substanz,
- bei der ein Vorratsbehälter (2) für die Substanz (3) vorgesehen ist,
- bei der ein Förderelement (6) mit einer Ausnehmung (7.1) vorgesehen ist,
- bei der eine Führung (5) vorgesehen ist, in der das Förderelement (6) translatorisch beweglich gelagert ist,
- bei der das Förderelement (6) mit der Ausnehmung (7.1) in eine erste und eine zweite Stellung bringbar ist, wobei die Ausnehmung (7.1) in der ersten Stellung vorgesehen ist, um die Substanz (3) aufnehmen und
wobei die Ausnehmung (7.1) in der zweiten Stellung vorgesehen ist, um die Substanz (3) abzugeben, und
- bei der der Vorratsbehälter (2) eine magnetische Fläche (16) aufweist.

2. Vorrichtung nach Patentanspruch 1,
- bei der ein Betätigungsmittel (10; 30, 31) vorgesehen ist, mittels welchem das Förderelement (6) in der Führung (5) bewegbar ist, und
- bei der eine Feder (12; 33) vorgesehen ist, um auf das Förderelement (6) eine Rückstellkraft auszuüben, wenn sich das Förderelement (6) in der zweiten Stellung befindet.

3. Vorrichtung nach Patentanspruch 1 oder 2,
bei der der Vorratsbehälter (2) einen Verschluss (4) aufweist, wobei die Führung (5) in den Verschluss (4) integriert ist.

4. Vorrichtung nach Patentanspruch 3,
bei der im Verschluss (4) ein Durchlass (22) vorgesehen ist, durch welchen das Bestätigungsmittel (10) ragt.

5. Vorrichtung nach Patentanspruch 4,
bei der am Durchlass (22) eine Dichtung (11) vorgesehen ist.

6. Vorrichtung nach Patentanspruch 1, 2 oder 3,
bei der das Betätigungsmittel einen Magneten (31) aufweist.

7. Vorrichtung nach Patentanspruch 6,
bei der der Magnet (31) ein Permanentmagnet oder ein Elektromagnet ist.

8. Vorrichtung nach Patentanspruch 6 oder 7,
bei der der Magnet (31) ausserhalb des Vorratsbehälters (2) angeordnet ist.

9. Vorrichtung nach einem der Patentansprüche 6 bis 8, bei der das Förderelement (6) magnetisierbar ist.

10. Vorrichtung nach einem der Patentansprüche 1 bis 9, bei der das Förderelement (6) einen Konus (9) aufweist.

11. Vorrichtung nach einem der Patentansprüche 1 bis 10, bei der die Ausnehmung (7.1) so im Förderelement (6) positioniert ist, dass sie im Vorratsbehälter (2) angeordnet ist, wenn sich das Förderelement (6) in der ersten Stellung befindet.

12. Vorrichtung nach einem der Patentansprüche 1 bis 11, bei der das Förderelement (6) wenigstens eine weitere Ausnehmung (7.1) aufweist.

13. Vorrichtung nach Patentanspruch 12,
bei der das Förderelement (6) in eine dritte Stellung bringbar ist, wobei die Ausnehmung (7.1) und die weitere Ausnehmung (7.2) in der dritten Stellung vorgesehen sind, um die Substanz (3) abzugeben.

14. Vorrichtung nach einem der Patentansprüche 1 bis 13, bei der die Ausnehmung (7.1 - 7.5) rund ist.

15. Dosierautomat,
- mit einer einen Elektromagneten (15) aufweisenden Halterung (13) zum Halten einer Dosiervorrichtung (1) nach einem der Patentansprüche 1 bis 9, und
- mit einer Steuerung (23) zum Steuern des Elektromagneten (15), zum Steuern des Betätigungsmittels (10; 30, 31) und zur Steuerung der Position der Halterung (13).

16. Verfahren zum Dosieren einer Substanz mit einer Dosiervorrichtung und einem Dosierautomaten nach Patentanspruch 15,
- bei dem die Halterung (13) über die Dosiervorrichtung (1) gebracht wird,
- bei dem der Elektromagnet (15) aktiviert wird,
- bei dem die Dosiervorrichtung (1) an den Ort gebracht wird, an dem die Dosierung erfolgen soll, und
- bei dem das Betätigungsmittel (10; 30, 31) betätigt wird.

17. Verfahren nach Patentanspruch 16,
bei dem der Magnet (31) des Betätigungsmittels (10; 30, 31) um das Förderelement (6) herum bewegt wird, oder
bei dem der Vorratsbehälter (2) gedreht wird.

18. Verwendung der Vorrichtung nach einem der Patentansprüche 1 bis 14,
zum feinen Dosieren einer pulverigen oder pastösen Substanz.

19. Magazin für eine Dosiervorrichtung nach einem der Patentansprüche 1 bis 14,
das eine Aufnahme (24; 25; 26) aufweist, die von oben und seitlich zugänglich ist.
